# EUROPÄISCHE PATENTSCHRIFT

(11) **EP 1 622 443 B1**
(45) Veröffentlichungstag und Bekanntmachung des Hinweises auf die Patenterteilung: **16.04.2014**
(21) Anmeldenummer: 04703871.6
(22) Anmeldetag: 21.01.2004
(51) Int. Cl.: A01B 63/108, A01B 63/10

(54) **ANORDNUNG UND VERFAHREN ZUR STEUERUNG EINES HUBWERKES EINES LANDWIRTSCHAFTLICHEN NUTZFAHRZEUGES**
ASSEMBLY AND METHOD FOR CONTROLLING THE LIFTING GEAR OF AN AGRICULTURAL UTILITY VEHICLE
DISPOSITIF ET PROCEDE DE COMMANDE DU SYSTEME DE LEVAGE D'UN VEHICULE AGRICOLE

(30) Priorität: 04.02.2003 DE 10304377
(43) Veröffentlichungstag der Anmeldung: 08.02.2006
(73) Patentinhaber: CNH Österreich GmbH, 4300 St. Valentin (AT)
(72) Erfinder: HRAZDERA, Oliver, A-4501 Neuhofen an der Krems (AT); FICHTINGER, Jürgen, A-3362 Mauer (AT); SCHOBER, Martin, A-4320 Perg (AT)
(74) Vertreter: Feldkamp, Rainer
(86) Internationale Anmeldenummer: PCT/IB2004/000797
(87) Internationale Veröffentlichungsnummer: WO 2004/068932

(56) Entgegenhaltungen:
- EP-A- 0 280 376
- FR-A- 2 571 925
- US-A- 4 508 176
- US-A- 5 012 415
- US-A- 5 421 416
- US-B1- 6 216 794

## Beschreibung

Die Erfindung betrifft ein Verfahren zur Steuerung eines Hubwerkes eines landwirtschaftlichen Nutzfahrzeuges, insbesondere eines Fronthubwerkes, und seine optimale Betätigung während der Fahrt auf nichtöffentlichen land-wirtschaftlich genutzten Flächen gemäß dem Oberbegriff des Anspruches 1 siehe z.B. US-A-5012415.

Landwirtschaftliche Nutzfahrzeuge mit Steuerungen von unterschiedlichen Hubwerken einschließlich ihrer angekoppelten Lasten sind in einer Vielzahl von verschiedenen Ausführungen bekannt.

Aus der DE 195 14 704 A1 ist eine Regeleinrichtung für das Hubwerk eines Ackerschleppers bekannt, bei der ein hydraulisch betätigbarer Verbraucher über eine Pumpe aus einem Tank gespeist wird und wo zwischen Pumpe und Verbraucher schaltbare Stellglieder angeordnet sind. Diese schaltbaren Stellglieder sind so ausgebildet, dass zusätzlich zu einer ersten Schaltstellungskombination, bei der kein Druckmedium zum Verbraucher fließt oder vom Verbraucher wegfließt, für jede Flussrichtung des Druckmediums zwei weitere Schaltstellungskombinationen möglich sind, in denen verschieden große Volumenströme zu dem Verbraucher fließen oder von diesem fortfließen. Dieser Lösung haftet der Nachteil an, dass die schaltbaren Stellglieder kompliziert aufgebaut und störungsanfällig sind. Zudem ist diese Regeleinrichtung finanziell aufwändig.

Aus der DE 39 22 517 A1 ist eine hydraulische Steuereinrichtung für einen doppelt wirkenden Verbraucher bekannt. Dabei ist das Hubwerk an einem landwirtschaftlichen Fahrzeug mit einem proportional wirkenden Regelwegeventil angeschlossen, dass Druckmittel von einer Druckmittelquelle zu einer Seite des Verbrauchers und von dieser zurück in einen Behälter steuert. Weiterhin wird auch ein Neutralumlauf von der Druckmittelquelle zum Behälter über eine Ventileinrichtung gesteuert, wobei die Ventileinrichtung in den Neutralumlauf des Regelwegventils geschaltet ist und in einer Grundstellung den Neutralumlauf und die andere Seite des Verbrauchers mit dem Behälter in einer ersten Arbeitsstellung den Neutralumlauf mit dem Behälter bei gesperrter Verbindung zur anderen Seite des Verbrauchers steuert. In einer zweiten Arbeitsstellung wird der Neutralumlauf mit der anderen Seite des Verbrauchers bei gesperrter Verbindung zum Behälter verbunden. Diese hydraulische Steuereinrichtung ist relativ kompliziert und aufwändig. Sie hat zwar den Vorteil, das sowohl das Heben als auch das Senken des Hubwerkes mit hydraulischer Kraft erfolgt, allerdings kann es aber dabei zu beträchtlichen Regelabweichungen kommen.

Aus der DE 44 20 166 C1 ist ein programmgesteuertes Regelungsverfahren für einen hydraulisch betätigten Verbraucher für das Hubwerk eines Ackerschleppers bekannt, bei dem die Ansteuerung des Verbrauchers über ein Pro-portionalventil erfolgt. Dabei erfolgt die Steuerung des Proportionalventils in Abhängigkeit von der Einstellung eines Sollwertgebers mittels einer elektronischen Regeleinrichtung, wobei der Verbraucher in zwei unterschiedliche Betriebszustände versetzt werden wird, bis ein voreingestellter Sollwert erreicht ist. Das Regelverfahren läuft dabei in drei Schritten ab. Erst erfolgt ein Vergleich des Verbraucher- Istwertes mit dem über einen Sollwertgeber eingestellten Sollwert, dann ein Sperren des ersten und zweiten Betriebszustandes mittels der Regeleinrichtung bei einer Abweichung des Sollwertes vom Istwert und anschließend erst die Ansteuerung des Verbrauchers in Abhängigkeit vom Sollwert, nachdem die Sperrung des ersten und zweiten Betriebszustandes aufgehoben ist.

Hierbei handelt es sich um eine programmgesteuerte Sicherheitsschaltung, die Fehlbedienungen zuverlässig vermeiden soll. Dieser Lösung haftet der Nachteil an, dass sie regelungstechnisch gesehen einen zusätzlicher Aufwand bedeutet und ihre vorteilhaften Wirkungen nur am Feldende wirken. Während des Dauerbetriebes dagegen, d. h. während des Eingriffes von angebauten Bearbeitungsgeräten, hat sie hinsichtlich einer unkomplizierten und schnellen Regelung der Hubwerksstellung Nachteile.

Aus der DE 44 28 824 A1 ist eine Steuereinrichtung zur Ansteuerung wenigstens eines Steuergerätes eines Arbeitsfahrzeuges bekannt, bei der eine Steuereinheit mit einem Steuergerät und wenigstens einem Bedienungselement elektrisch so verbunden ist, dass der Einstellung des Betriebszustandes als eine durch die Steuerung wählbar beeinflussbare Funktion möglich ist. Die Steuereinheit weist dabei Mittel auf, die aufgrund eines Betätigungssignals von einem Bedienungselement einen Automatikmodus aktivieren oder deaktivieren. Dabei ist mit der Steuereinheit ein von den übrigen Bedienungselementen unabhängig betätigbarer Automatikschalter und ein Sensor zur Erfassung der Hubwerkslage elektrisch verbunden. Bei aktiviertem Automatikmodus erfolgt die Ansteuerung wenigstens eines Steuergerätes in Abhängigkeit der durch den Sensor ermittelten Hubwerklage nach einem vorgebbaren Programm. Diese technische Lösung ist relativ aufwändig und kostenintensiv. In der DE 34 38 353 C2 ist eine hydraulische Einrichtung für einen Traktor mit einer heck- und frontseitigen Geräteanbauvorrichtung und je einem damit zum Heben und Senken von Arbeitsgeräten gekoppelten Hubwerk mit wenigstens je einem hydraulischen Hubzylinder beschrieben. Diese hydraulischen Hubzylinder sind über hydraulische Steuermittel ansteuerbar und weisen jeweils ein Wegeventil auf Sie werden von einer gemeinsamen Druckmittelquelle versorgt. Als Regelgröße wird hierbei der Druck in wenigstens einem Hubzylinder benutzt. Hierzu ist mindestens ein vorgesteuertes Druckregelventil mit einem Anschluss für geregelten Druck und einem Weiterlauf- Anschluss angeordnet, wobei der Anschluss für geregelten Druck mit dem frontseitigen Hubzylinder und dessen Weiterlaufanschluss mit dem Wegeventil für das Heckhubwerk in Verbindung steht.

Aufgabe der Erfindung ist es, eine einfache und kostengünstige Anordnung und ein einfaches Verfahren zur Steuerung eines Hubwerkes, insbesondere eines Fronthubwerkes eines landwirtschaftlichen Nutzfahrzeuges, zu schaffen, das mit wenigen Betätigungselementen auskommt, sich einfach und sicher bedienen lässt und das Management des Hubwerkes optimiert.

Die Aufgabe wird erfindungsgemäß mit den Merkmalen der Patentansprüche 1 und 3 gelöst, wobei in den Unteransprüchen Merkmale angeführt sind, die die erfindungsgemäße Lösung in vorteilhafter Weise weiterentwickeln.

Die erfindungsgemäße Anordnung zur Steuerung eines Hubwerkes eines landwirtschaftlichen Nutzfahrzeuges, insbesondere eines Fronthubwerkes, besteht aus mindestens einem Positionssensor 1, der mit dem Hubwerk so verbunden ist, dass er zu jedem gewünschten Zeitpunkt und in jeder Stellung des Hubwerkes dessen genaue Lage ermittelt und dieses Signal an die Elektronikeinheit 5 zwecks Auswertung und Anzeige in Echtzeit übermittelt. Die Betätigung des Hubwerkes 2 erfolgt bekannterweise dabei mittels eines angeordneten Hydraulikaggregats 3 über eine Hubwerkbefestigungs- und - betätigungseinheit 4 und Überwachung durch die Elektronikeinheit 5. Zur einfachen Steuerung ist der Positionssensor 1 des Fronthubwerkes 2 über die Elektronikeinheit 5 mit mehreren im Bedienbereich des Fahrers angeordneten und direkt gekoppelten Tastern 10 und 11 verbunden. Darüber hinaus ist erfindungsgemäß im Bedienbereich ein Hubwerkbetätigungshebel 12 an die Elektronikeinheit 5 angeschlossen. Diese wiederum ist mit dem proportional anzusteuernden Zusatzsteuergerät 6 verbunden. In einer speziellen Ausführungsfonn der Erfindung ist der Hubwerkbetätigungshebel 12 außer mit der Elektronikeinheit 5 auch mit dem Zusatzsteuergerät 6 verbunden.

Beim erfindungsgemäßen Verfahren zur Steuerung eines Hubwerkes 2 eines landwirtschaftlichen Nutzfahrzeuges, insbesondere eines Fronthubwerkes, wird über einen Taster 10 die untere Sollposition (gewünschte Arbeitslage) des Fronthubwerkes 2 direkt in den Speicher der Elektronikeinheit 5 mittels Betätigung der Speicherbetätigungstaste 15 gespeichert. Nach erfolgter Speicherung wird nunmehr bei Betätigung des Tasters 10 das Hubwerk 2 immer auf diese untere Sollposition abgesenkt. Über einen weiteren im Bedienbereich des Fahrers angeordneten Taster 11 wird die obere Sollposition des Hubwerks 2 direkt in den Speicher der Elektronikeinheit 5 gespeichert, ebenfalls in Kombination durch Drücken der Speicherbetätigungstaste 15. Danach wird bei alleiniger Betätigung des Tasters 11 das Hubwerk 2 auf die obere Sollposition gehoben.

In einer bevorzugten Ausgestaltung der Erfindung ist der Hubwerkbetätigungshebel 12 des weiteren auch direkt mit dem Zusatzsteuergerät 6 verbunden. Dadurch wird es möglich, dass das Hubwerk 2 auch unabhängig über eine Vorrangschaltung direkt über den Hubwerkbetätigungshebel 12 mittels des Zusatzsteuergerätes (6) steuerbar ist. Dies ist insbesondere bei kritischen Bodenunebenheiten oder bei Hindernissen oder in Havariesituationen von Vorteil, so dass eine proportionale Steuerung und Betätigung des Hubwerkes 2 ohne Elektronikeinheit 5 möglich ist. Allerdings werden in diesem Fall die jeweils gespeicherte untere und obere Sollposition des Hubwerkes 2 nicht verändert. Das Hubwerk 2 kann so sehr schnell auf eine sogenannte Schwimmposition angehoben werden.

In einer anderen vorteilhaften Ausführung der Erfindung sind im Bedienbereich des Fahrers zwei Ölmengenregler 13 und 14 angeordnet. Mittels dieser Ölmengenregler 13 und 14 können entsprechende Ölmengen für das Heben und Absenken des Hubwerks 2 voreingestellt werden. Diese Ölmengen sind durch zusätzliches Betätigen der Speichertaste 15 über die Elektronikeinheit 5 auch programmier- und speicherbar, wenn diese eine Verbindung zur Elektronikeinheit 5 besitzen.

Ebenfalls von Vorteil ist eine Ausführung, bei der die voreingestellte bzw. programmierte Ölmenge, die mittels den zwei Ölmengenreglem 13 und 14 voreinstellbar bzw. programmierbar ist, d. h. jeweils die Ölmengen, die für das Heben und Absenken des Hubwerkes 2 notwendig sind, von der Elektronikeinheit 5 in Echtzeit überwacht werden und bei Bedarf regulierbar sind. Dadurch wird ein Überfahren des jeweils erforderlichen Hubwerkpositionspunktes so gut wie ausgeschlossen.

In einer weiteren speziellen Ausgestaltung der Erfindung sind am Hubwerk 2 ein oder mehrere Sensoren angeordnet. Solcherart Sensoren können sein: z.B. ein oder mehrere mitlaufende starre und/oder gedämpfte Räder, und/oder Ultraschallsensoren, und/oder Bodenradarsensoren und/oder Sensoren auf lichtoptischer Basis. Mittels dieser Sensoren am Hubwerk 2 kann in Echtzeit die jeweils tatsächliche Position des Hubwerkes 2 gegenüber der Bodenoberfläche ermittelt werden. Die Steuerung der optimalen Position des Hubwerkes 2 erfolgt vorteilhaft in Abhängigkeit von einem in der Elektronikeinheit 5 gespeicherten Steuerprogramm dabei so, dass kleine oder kurze Bodenunebenheiten ausgeglichen werden, wobei aber ein Minimalabstand von der Bodenoberfläche nicht unterschritten wird.

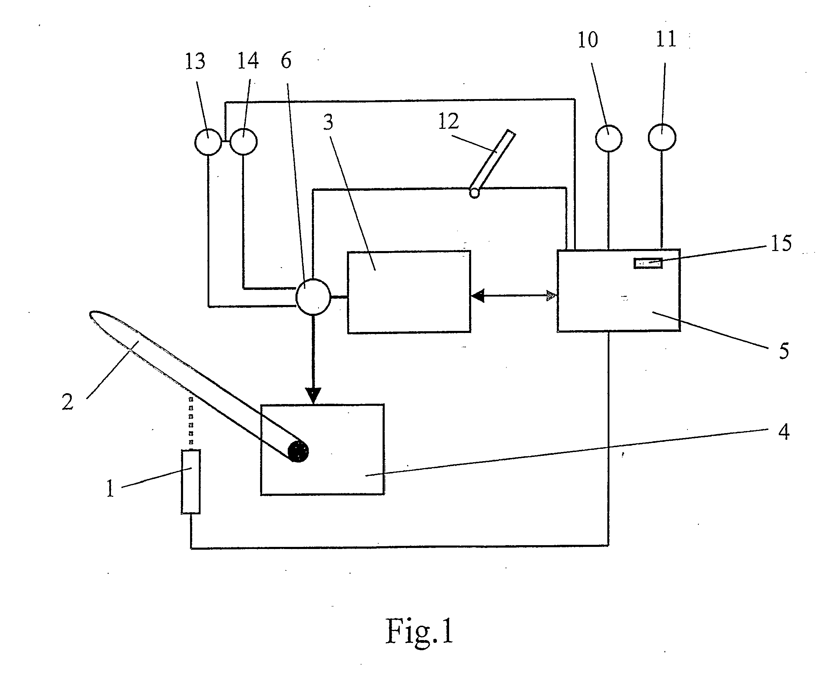

Die Erfindung soll nachstehend in einem Ausführungsbeispiel an Hand der mit Fig. 1 bezeichneten Zeichnung näher beschrieben werden. Sie zeigt schematisch die Anordnung eines Fronthubwerkes 2 eines landwirtschaftlichen Nutzfahrzeuges und die zugehörige Verschaltung zur Steuerung dieses Hubwerkes. Am Fronthubwerk 2 ist ein Positionssensor 1 so angeordnet, dass die genaue Position des Fronthubwerkes in Echtzeit ermittelt werden kann und das entsprechende Positionssignal zur Auswertung und Anzeige in die Elektronikeinheit 5 eingespeist wird. Das Fronthubwerk 2 ist an einer Hubwerkbefestigungs- und -betätigungseinheit 4 angeordnet. Die Hydraulikeinheit 3 ist über das Zusatzsteuergerät 6, das allein zur Steuerung des Fronthubewerkes 2 dient, mit der Hubwerkbefestigungs- und -betätigungseinheit 4 verbunden. Zur Ansteuerung und Überwachung des Hydraulikaggregats 3, das auch für alle anderen Hydrauliksysteme eines Traktors, wie z. B. eines Heckhubwerkes, die Bereitstellung der Hydraulikflüssigkeit übernimmt, ist dieses mit der zentralen Elektronikeinheit 5 verbunden. Weiterhin ist der Positionssensor 1 des Fronthubwerkes 2 über die Elektronikeinheit 5 mit mehreren im Bedienbereich des Fahrers angeordneten und direkt gekoppelten Tastern 10 und 11 verbunden. Mittels des Tasters 10 kann die untere Sollposition des Fronthubwerkes 2 direkt in den Speicher der Elektronikeinheit 5 gespeichert werden, indem beim erstmaligen Erreichen der unteren Sollposition der Taster 10 gedrückt wird und unmittelbar danach die Speichertaste 15 betätigt wird. Ist diese Positionsprogrammierung einmal erfolgt, wird bei jeder Betätigung der Taste 10 das Fronthubwerk 2 genau auf die untere Sollposition abgesenkt.

Die obere Sollposition wird in den Speicher der Elektronikeinheit 5 programmiert, indem beim erstmaligen Erreichen dieser oberen Position zunächst der Taster 11 und dann die Speichertaste 15 betätigt wird. Danach erfolgt bei jeder Betätigung des Tasters 11 das Anheben des Fronthubwerkes 2 auf diese festgelegte obere Fronthubwerksposition.

Im Bedienbereich des Fahrers ist des weiteren ein Hubwerksbetätigungshebel 12 angeordnet, der direkt über das Zusatzsteuergerät 6 mit dem Fronthubwerk 2 zur proportionalen Steuerung des Fronthubwerkes verbunden ist, wobei dieser gleichzeitig aus Überwachungsgründen mit der Elektronikeinheit 5 verbunden ist. Dadurch wird ausgeschlossen, dass allein durch Betätigung des Hubwerkbetätigungshebels 12 (falls sie vorher gespeichert wurden) die gespeicherte untere und obere Fronthubwerkstellung nicht überfahren werden kann. Mit dem Zusatzsteuergerät 6 sind zwei Ölmengenregler 13 und 14, (jeder für sich einzeln, um getrennte Ölmengen einstellen zu können) verbunden. Mittels des Ölmengenreglers 13 ist die Ölmenge für das Heben des Fronthubwerkes 2 und mit dem Ölmengenregler 14 das Absenken des Fronthubwerkes 2 voreinstellbar und programmierbar. Das hat den Vorteil, dass eine sehr genaue Positionierung des Fronthubwerkes unabhängig von den Schwankungen der Hydraulikölmenge in der Hydraulikeinheit möglich ist.

Damit Fehleinstellungen der Ölmengenregler 13 und 14 zuverlässig vermieden werden können, werden die voreingestellten bzw. programmierten Ölmengen für das Heben und Absenken des Fronthubwerkes 2 von der Elektronikeinheit 5 überwacht. Hierzu sind die zwei Ölmengenregler 13 und 14 ebenfalls mit der Elektronikeinheit verbunden. So kann bei Bedarf entweder ein Fehlbedienungssignal ausgelöst bzw. ein mögliches Überfahren der jeweils erforderlichen Fronhubwerkpositionspunkte ausgeschlossen werden. Sowohl die untere und die obere Sollposition als auch die jeweils aktuelle Ist- oder Arbeitsposition des sich im Einsatz befindlichen Fronthubwerkes 2 werden im Bedienbereich des Fahrers in geeigneter Weise über ein Display sichtbar angezeigt. (In der Zeichnung nicht dargestellt).

Durch die Überwachung mittels der Elektronikeinheit 5 ist ebenfalls ausgeschlossen, dass z. B. die obere Sollposition des Fronthubwerkes 2 nicht unter der unteren Sollposition liegen kann. In einer speziellen Ausführungsform ist der Hubwerksbetätigungshebel 12 nur über die Elektronikeinheit 5 mit dem Zusatzsteuergerät 6 verbunden. Das bedeutet, dass die direkte Kopplung mit dem Zusatzsteuergerät 6 entfallen kann. Durch die Verwendung eines Zusatzsteuergerätes 6 wird der Aufwand, der bei rein elektronischer Hubwerksregelung notwendig ist, beträchtlich verringert. In der Regel sind in einem landwirtschaftlichen Nutzfahrzeug ein oder mehrere Zusatzsteuergeräte für andere Aufgaben vorhanden.

### Liste der verwendeten Bezugszeichen

- 1: Positionssensor
- 2: Hubwerk (Fronthubwerk)
- 3: Hydraulikeinheit
- 4: Hubwerkbefestigungs- und -betätigungseinheit
- 5: Elektronikeinheit
- 6: Zusatzsteuergerät
- 10: Taster untere Hubwerksstellung
- 11: Taster obere Hubwerksstellung
- 12: Hubwerkbetätigungshebel
- 13: Ölmengenregler (zum Absenken)
- 14: Ölinengeuregler (zum Anheben)
- 15: Speicherbetätigungstaste

## Patentansprüche

1. Anordnung zur Steuerung eines Hubwerkes (2) eines landwirtschaftlichen Nutzfahrzeuges, insbesondere eines Fronthubwerkes, mit mindestens einem Positionssensor (1), einem Hydraulikaggregat (3) und einer Elektronikeinheit (5), **dadurch gekennzeichnet,**
**dass** der Positionssensor (1) des Hubwerkes (2) über die Elektronikeinheit (5) mit mehreren im Bedienbereich des Fahrers angeordneten und direkt gekoppelten Tastern (10 und 11) zur Speicherung einer unteren bzw. oberen Sollposition bei deren Erreichen verbunden ist,
**dass** das Hydraulikaggregat (3) mit den Hubwerk Betätigungseinheit (4) über ein Zusatzsteuergerät (6) verbunden ist,
und **dass** ein Hubwerkbetätigungshebel (12) direkt über das Hydraulikaggregat (3) und das Zusatzsteuergerät (6) mit dem Hubwerk (2) zur proportionalen Steuerung verbunden ist, wobei der Hubwerkbetätigungshebel (12) gleichzeitig mit der Elektronikeinheit (5) verbunden ist.

2. Anordnung nach Anspruch 1, **dadurch gekennzeichnet, dass** mit dem Zusatzsteuergerät (6) zwei Ölmengenregler (13;14) verbunden sind, die zur Voreinstellung und Programmierung getrennter Ölmengen für das Heben bzw. Absenken des Hubwerkes (2) ausgebildet und mit der Elektronikeinheit (5) verbunden sind.

3. Verfahren zur Steuerung eines Hubwerkes eines landwirtschaftlichen Nutzfahrzeuges, insbesondere eines Fronthubwerkes, mit mindestens einem Positionssensor, einem Hydraulikaggregat und einer Elektronikeinheit,
**dadurch gekennzeichnet,**
**dass** über einen Taster (10) die untere Sollposition des Hubwerkes (2) direkt in einen Speicher der Elektronikeinheit (5) gespeichert wird und bei seiner Betätigung das Hubwerk (2) auf die untere Sollposition abgesenkt wird,
**dass** über einen Taster (11) die obere Sollposition des Hubwerkes (2) direkt in den Speicher der Elektronikeinheit (5) gespeichert wird und bei seiner Betätigung das Hubwerk (2) auf die obere Sollposition gehoben wird,
wobei die Positionsprogrammierung durch Betätigen einer Speichertaste (15) erfolgt,
und **dass** das Hubwerk (2) dann direkt durch Betätigung des Tasters (10) auf die untere Sollposition und die Betätigung des Tasters (11) auf die obere Sollposition bewegt wird,
und **dass** das Hubwerk auch unabhängig über eine Vorrangschaltung direkt über einen Hubwerkbetätigungshebel (12) mittels eines Zusatzsteuergerätes (6) steuerbar ist.

4. Verfahren zur Steuerung eines Hubwerkes nach Anspruch 2,
**dadurch gekennzeichnet,**
**dass** mittels zwei Ölmengenreglern (13;14) getrennte Ölmengen für das Heben bzw. Absenken des Hubwerkes (2) voreinstellbar und programmierbar sind.

5. Verfahren zur Steuerung eines Hubwerkes nach Anspruch 4,
**dadurch gekennzeichnet,**
**dass** die mittels der zwei Ölmengenregler (13;14) voreingestellten bzw. programmierten Ölmengen für das Heben bzw. Absenken des Hubwerkes (2) von der Elektronikeinheit (5) überwacht und bei Bedarf regulierbar sind, so dass ein Überfahren des jeweils erforderlichen Hubwerkpositionspunktes so gering wie möglich gehalten wird.

6. Verfahren zur Steuerung eines Hubwerkes nach Anspruch 3,
**dadurch gekennzeichnet,**
**dass** mittels eines oder mehrerer Sensoren am Hubwerk (2) in Echtzeit die Position des Hubwerkes (2) gegenüber der Bodenoberfläche ermittelt wird und die Position des Hubwerkes in Abhängigkeit von einem in der Elektronikeinheit (5) gespeicherten Steuerprogramm so gesteuert wird, dass kleine oder kurze Bodenunebenheiten ausgeglichen werden, wobei aber ein Minimalabstand von der Bodenoberfläche nicht unterschritten wird.

## Claims

1. Assembly for controlling a lifting gear (2) of an agricultural utility vehicle, especially of the front lifting gear, comprising at least one position sensor (1), a hydraulic unit (3) and an electronic unit (5), **characterized in that**:
the position sensor (1) of the lifting gear (2) is coupled via the electronic unit (5) to several directly coupled push button switches (10 and 11) arranged in the driver working area for storing a lower and upper set point position, respectively, on reaching thereof,
the hydraulic unit (3) is connected to the lifting gear actuating unit (4) via an add-on-controller (6), and
a lifting gear actuation lever (12) is directly connected via the hydraulic unit (3) and the add-on-controller (6) to the lifting gear (2) for proportional control thereof, the lifting gear actuation lever (12) being further being connected to the electronic unit (5).

2. Assembly according to claim 1, **characterized in that** two oil flow controllers (13; 14) are connected to the add-on-controller (6), said oil flow controllers being arranged for pre-setting and programming of individual oil flows for the lifting and lowering of the lifting gear (2), respectively, and coupled to the electronic unit (5).

3. Method for controlling a lifting gear of an agricultural utility vehicle, especially of a front lifting gear, comprising at least one position sensor, a hydraulic unit and an electronic unit, **characterized in that**:
the lower set point position of the lifting gear (2) is directly stored via a push button switch (10) in a memory of the electronic unit (5), the lifting gear (2) being lowered to the lower set point position on actuation of this push button key,
the upper set point position of the lifting gear (2) is directly stored via a push button switch (11) in the memory of the electronic unit, the lifting gear (2) being raised to the upper set point position on actuation of this push button switch,
the position programming being performed by actuating a memory key (15), and the lifting gear (2) subsequently being moved to the lower set point position by actuating the push button switch (10) and moved to the upper set point position by actuating the push button switch (11), and
the lifting gear further being independently controllable via a priority circuit directly via a lifting gear actuating lever (12) by means of an add-on-controller (6).

4. Method for controlling a lifting gear according to claim 2, **characterized in that** individual oil flows are presettable and programmable for raising and lowering of the lifting gear (2), respectively, by means of at least two oil flow controllers (13; 14).

5. Method for controlling a lifting gear according to claim 4, **characterized in that** the oil flows preset or programmed by means of the two oil flow controllers (13; 14) for raising and lowering of the lifting gear (2), respectively, are monitored by the electronic unit (5) and are adapted to be regulated on requirement such that overrunning of the respective required lifting position set point is reduced as far as possible.

6. Method for controlling a lifting gear according to claim 3, **characterized in that** the position of the lifting gear (2) relative to the ground surface is determined in real time by means of one or more sensors at the lifting gear (2), and that the position of the lifting gear is controlled in response to a control program stored in the electronic unit (5), such that small or short ground unevennesses are compensated without falling below a minimum ground clearance.

## Revendications

1. Dispositif de commande d'un système de levage (2) d'un véhicule agricole, notamment d'un système de levage frontal, comprenant au moins un capteur de position (1), un groupe hydraulique (3) et une unité électronique (5), **caractérisé en ce que** :
le capteur de position (1) du système de levage (2) est connecté, par l'intermédiaire de l'unité électronique (5) à plusieurs boutons logés dans la zone de commande du conducteur et couplés directement, permettant de mémoriser une position de consigne inférieure ou supérieure lors de leur atteinte,
**en ce que** le groupe hydraulique (3) est connecté à l'unité d'actionnement (4) du système de levage par l'intermédiaire d'un appareil de commande supplémentaire (6),
et **en ce qu'**un levier d'actionnement de système de levage (12) est connecté directement par l'intermédiaire du groupe hydraulique (3) et de l'appareil de commande supplémentaire (6) au système de levage (2) pour une commande proportionnelle, moyennant quoi le levier d'actionnement de système de levage (12) est connecté simultanément à l'unité électronique (5).

2. Dispositif selon la revendication 1, **caractérisé en ce que** deux régulateurs de débit d'huile (13, 14) sont connectés à l'appareil de commande supplémentaire (6), lesquels sont construits pour réaliser un préréglage et une programmation de débits d'huile séparés pour soulever ou abaisser le système de levage (2) et sont connectés à l'unité électronique (5).

3. Procédé de commande d'un système de levage d'un véhicule agricole, notamment d'un système de levage frontal, comportant au moins un capteur de position, un groupe hydraulique et une unité électronique, **caractérisé en ce que** :
la position de consigne inférieure du système de levage (2) est enregistrée directement dans une mémoire de l'unité électronique (5) par l'intermédiaire d'un bouton (10) et, lors de l'actionnement de ce dernier, le système de levage (2) est abaissé à la position de consigne inférieure,
la position de consigne supérieure du système de levage (2) est enregistrée directement dans une mémoire de l'unité électronique (5) par l'intermédiaire d'un bouton (11) et, lors de l'actionnement de ce dernier, le système de levage (2) est levé à la position de consigne supérieure,
moyennant quoi la programmation de position s'effectue par actionnement d'un bouton de mémorisation (15),
et **en ce que** le système de levage est ensuite mis en mouvement directement par actionnement du bouton (10) vers la position de consigne inférieure et par actionnement du bouton (11) vers la position de consigne supérieure,
et **en ce que** le système de levage peut aussi être commandé indépendamment par l'intermédiaire d'un circuit de priorité directement par un levier d'actionnement de système de levage (12) au moyen d'un appareil de commande supplémentaire (6).

4. Procédé de commande d'un système de levage selon la revendication 2, **caractérisé en ce que** :
des débits d'huile séparés pour le levage ou l'abaissement du système de levage (2) peuvent être préréglés ou programmés au moyen de deux régulateurs de débit d'huile (13, 14).

5. Procédé de commande d'un système de levage selon la revendication 4, **caractérisé en ce que** :
les débits d'huile préréglés ou programmés pour le levage ou l'abaissement du système de levage (2) au moyen des deux régulateurs de débit d'huile (13, 14) sont surveillés par l'unité électronique (5) et peuvent être régulés si nécessaire, de telle sorte qu'un dépassement de la position du système de levage respectivement nécessaire sera maintenu aussi faible que possible.

6. Procédé de commande d'un système de levage selon la revendication 3, **caractérisé en ce que** :
la position du système de levage vis-à-vis de la surface du sol est déterminée en temps réel au moyen d'un ou plusieurs capteurs sur le système de levage (2) et la position du système de levage, sur la base d'un programme de commande enregistré dans l'unité électronique (5), est commandée de telle sorte que des brèves ou petites irrégularités du sol sont compensées, en conservant toutefois une distance minimale vis-à-vis de la surface du sol.
